# EUROPEAN PATENT SPECIFICATION

(11) **EP 2 372 204 B1**
(45) Date of publication and mention of the grant of the patent: **06.05.2015**
(21) Application number: 11158467.8
(22) Date of filing: 16.03.2011
(51) Int. Cl.: F16K 41/02, F16J 15/18

(54) **Seal system for high-pressure fluid shut-off valves**
Dichtungssystem für Hochdruck-Absperrventile
Système d'étancheité pour vannes de haute pression

(30) Priority: 17.03.2010 IT VI20100073
(43) Date of publication of application: 05.10.2011
(73) Proprietor: Tyco Valves & Controls Italia S.r.L., 29018 Lugagnano Val D'arda (IT)
(72) Inventor: Manzetti, Bruno, 29018 Lugagnano Val D'Arda (PC) (IT)
(74) Representative: Lawrence, John

(56) References cited:
- US-A- 4 379 557
- US-A- 4 899 899
- US-A- 5 290 046

## Description

### TECHNICAL FIELD OF THE INVENTION

The present invention concerns the field of fluid shut-off valves. In particular, the present invention concerns seal systems for fluid shut-off valves and shut-off valves comprising said seal systems

### STATE OF THE ART

Shut-off valves are applied for example to pipes or to machines in which the flow of fluids such as natural gas, fuels and the like must be adjusted or interrupted.

To adjust the flow rate of fluid it is possible to use parts that lift up from a fixed seat on which they can form a seal, or parts that, by rotating, uncover a more or less big through port. In practice, an actuating element is fitted with a fixed seat and is free to carry out a relative movement with respect to the latter. The relative motion can be a translation and/or a rotation. It is thus necessary to make a hermetic seal between the actuating element and the fixed seat of the valve so as to prevent leaks of fluid under pressure inside the valve.

The great variety of fluids that can pass through the shut-off valves has a substantial influence upon the choice of materials and shapes with which the various parts of the valve and in particular the aforementioned seal systems can be built.

The prior art for example foresees the use of a large group of seals, also called packing rings, according to the use and the operating conditions, such as temperature, pressure and type of fluid.

Normally, packs of rings made from expanded graphite preformed together with rings made from woven graphite fibres are used.

However, this type of seal does not avoid leaks of gas or hydrocarbons since the graphite is permeable to them.

An improved variant is to use pre-shaped graphite rings that during the closing of the gland compact together reducing the percentage of fluid that can pass keeping such properties even for high temperatures.

It is also possible to use rings made from rubber, PTFE, or plastic materials in general, however limiting such solutions to use with not too high temperatures to avoid the degradation of their characteristics.

The greatest drawbacks of these packing rings for commercial use relate to the leaks of fluid at high temperatures.

In the state of the art the technical solution that makes it possible not to have leaks is the use of metallic bellows, which nevertheless have problems of application particularly in the case of large movements of the closing element (as occurs for example in gate valves) or in the case of high pressures, or else in the cases in which the closing element has a rotary movement. Examples of seal systems for valves can be found in US 4,899,899 and US 5,290,046.

In the field of refinery of petroleum products, for example, the fluids involved can be liquefied natural gas or other types of valuable materials. In these cases, the leaks of these materials are greatly unwanted both due to the problems of human and environmental safety that arise, and due to the costs of the materials themselves. An example of a seal system suitable for valves utilized in pipelines which carry petroleum product is shown in US 4,379,557.

Consequently, one of the purposes of the present invention is to provide seal systems for shut-off valves that are reliable and efficient.

### SUMMARY OF THE PRESENT INVENTION

The present invention is based on the general idea of providing at least three independent packs of sealing rings between the actuating element of the valve and the corresponding fixed seat on the body or cover thereof. In other words, the present invention is based on the general idea of providing three packs of sealing rings adapted to be loaded separated from one another by the pressure of the fluid. In particular, the three packs are independent from each other so that, for example, any one of the three packs can be loaded while the other two are not. In this way, the seal of each of the three packs is completely independent from the seal of the other two packs. In other words, the sealing properties of one of the three packs has no influence on the sealing properties of the other two.

According to an embodiment of the present invention, the first pack of rings is arranged on the stem towards the inner side of the valve, i.e. towards the portion of the valve through which the fluid flows. This first pack can be adapted to auto-load due to the pressure of the fluid itself that passes through the valve in this way carrying out the sealing effect.

According to present invention, the second pack is arranged on the stem towards the outer side of the valve. The second pack can comprise a multi-layer combination of graphite rings and steel rings, performing the sealing and impermeable function, and the addition of rings of woven carbon fiber to give mechanical strength to the pack itself. This pack can thus have the function of making the seal even in the case of fire.

According to the present invention, between the first and the second pack there is a third pack of rings (intermediate pack). The third pack can be different from the first. In particular, the third pack can comprise at least one elastic means adapted to create a pre-load such as to also prevent a small amount of possible fluid leaking from the first pack passing through it before the pressure reaches the values needed to load it and thus create a further sealing barrier. The three packs are adapted to be loaded separately by the pressure of the fluid.

According to the present invention, spacing means fixedly connected to the fixed body of the valve can be associated with each of the three groups of packs. The spacing means can be adapted to exert the counter pressure on the corresponding pack subject to the pressure of the fluid. By means of the spacing means the three packs are thus made independent from one another so as not to be able to be loaded simultaneously by the pressure.

According to a further embodiment of the present invention, the seal system can also comprise a plurality of guide rings of the actuating element of the valve. The guide rings can be fitted between the mobile actuating member and the fixed member of the valve to maintain the seal and ensure the alignment between the various components. The guide rings can be arranged at the ends of the seal system and at the spacing means of the various packs. In particular, the guide rings are adapted to ensure that the stem is coaxial with the various sealing rings.

According to the present invention a fluid shut-off valve is provided as defined in independent claim 1.

Preferred embodiments are defined in the dependent claims.

### BRIEF DESCRIPTION OF THE FIGURES

Further characteristics and advantages of the present invention will be more clearly highlighted by the following description of some embodiments illustrated, purely as examples and not for limiting purposes, in the attached tables of drawings in which similar or corresponding parts are indicated with the same reference numerals and in which:
- Figure 1 schematically illustrates a section view of the area involved in the seal of a fluid shut-off valve according to an embodiment of the present invention;
- Figure 2 schematically illustrates the system shown in figure 1 in exploded configuration;
- Figure 3 schematically illustrates the first inner barrier pack according to an embodiment of the present invention;
- Figure 4 schematically illustrates the intermediate barrier pack according to an embodiment of the present invention;
- Figure 5 schematically illustrates the second outer barrier pack according to an embodiment of the present invention.

### DETAILED DESCRIPTION

Hereafter, the present invention is described with reference to particular embodiments as illustrated in the attached tables of drawings. However, the present invention is not limited to the particular embodiments described in the following detailed description and represented in the figures, but rather the embodiments described simply exemplify various aspects of the present invention, the purpose of which is defined by the claims.

Further modifications and variations of the present invention will become clear to the man skilled in the art. The present description must thus be considered to include all of said modifications and/or variations of the present invention, the purpose of which is defined by the claims.

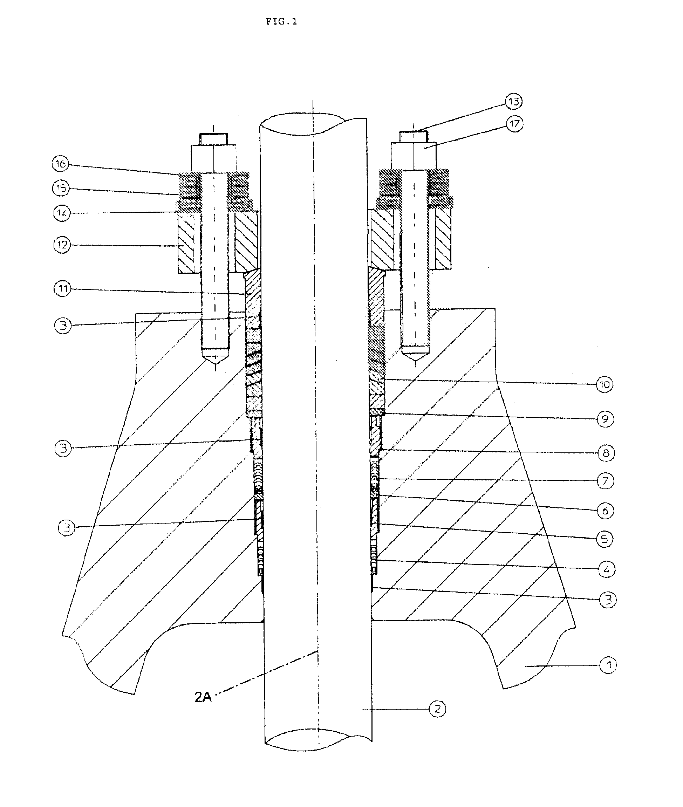

Figure 1 schematically illustrates a section view of the area involved in the sealing of a fluid shut-off valve according to an embodiment of the present invention.

In particular, figure 1 shows the actuating element 2 of the shut-off component of the valve in the section in which it passes through a fixed element 1 for example arranged on the cover of the valve or on the valve body.

In the drawing the shut-off component is not illustrated for the sake of ease of depiction, but it is clear that, with respect to the illustrated drawing, said shut-off component will be arranged on the lower side of the actuating element 2 and inside the valve body cover.

The actuating element 2 carries out a relative movement with respect to the fixed element 1 in which it is fitted while fluid under pressure generally passes inside the valve: it therefore becomes necessary to make the seal against the leaking of liquid between the fixed element 1 and the actuating element 2.

The system shown in figure 1 comprises three packs of sealing rings, respectively indicated with reference numerals 4, 7 and 10. In particular, the system comprises a first inner pack 4 arranged on the actuating element 2 towards the inner side of the valve, i.e. towards the portion of the valve through which the fluid flows. The system also comprises a second outer pack 10 arranged on the actuating element 2 towards the outer side of the valve. Finally, the system comprises the intermediate pack 7 arranged between the first pack 4 and the second pack 10.

The packs of rings 4, 7 and 10 block the leaking of fluid between the actuating element 2 and the fixed element 1. Moreover, as described in detail hereafter, at least one of the three packs of sealing rings, for example the outer pack 10, can be adapted to also create a barrier against fire.

The three packs of rings 4, 7 and 10 shows in figure 1 are not the same as each other. In particular, each of the three packs of rings 4, 7 and 10 has a very precise function that makes it different from the others and makes it equally operative when needed as described in detail hereafter.

Again from figure 1 it can be seen that each of the three packs of rings 4, 7 and 10 is housed in corresponding seats of the fixed element 1 of the valve. The packs are arranged in series along the actuating element 2 and are coaxial with respect to the axis 2A of the actuating element 2.

Figure 1 also shows that between the series of packs 4, 7 and 10 of rings there are spacing means 5 and 8 that are fixedly connected with the fixed element 1. In particular, the spacing means 5 are arranged between the first inner pack 4 and the intermediate pack 7 whereas the spacing means 8 are arranged between the intermediate pack 7 and the second outer pack 10.

The spacing means 5 and 8 can for example comprise ring nuts, not necessarily threaded, on the seat.

The second outer pack 10 is kept closed by a gland 11 loaded with tension rods and springs that maintain its pre-load.

The spacing means 5 and 8 are adapted to make the three packs 4, 7 and 10 independent from one another, which otherwise would be simultaneously loaded by the pressure of the internal fluid.

Moreover, the gland 11 is adapted to create the necessary compression on the outer end of the second outer pack 10 of rings.

The barrier against leaking of fluid occurs after the axial thrusting action on at least one of the packs of rings 4, 7 and 10. This thrusting generates a squashing of the rings and their deformation, sealing the cavity between actuating element 2 and fixed element 1.

The seal is already ensured by the first inner pack 4, i.e. the first pack that is encountered along the axis 2A of the stem 2, starting from inside the valve, i.e. from the region in which the fluid flows.

Figure 1 also shows that the fixed element 1 of the valve is adapted to house the seal system comprising the three packs 4, 7 and 10. In particular, the fixed element 1 is provided with seats, each of which is adapted to house one of the three packs of sealing rings.

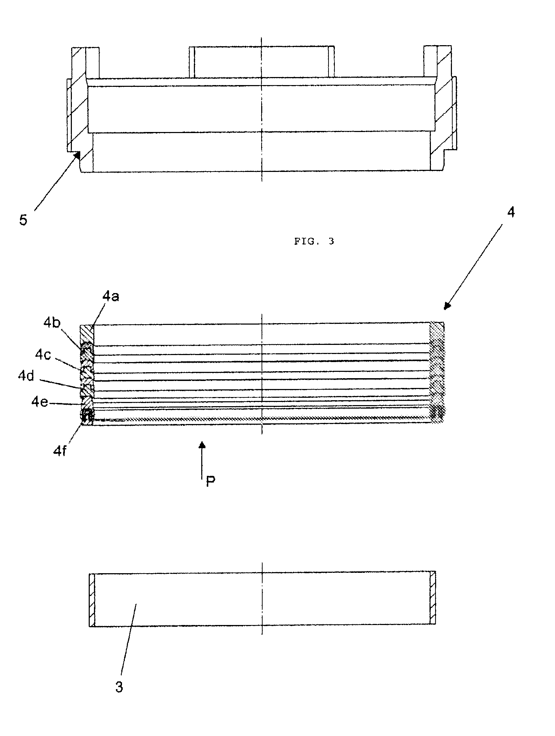

Figure 3 schematically illustrates a possible embodiment of the first inner pack 4 according to a particular embodiment of the present invention.

The first pack 4 shown in figure 3 comprises a plurality of coaxial and adjacent rings 4a, 4b, 4c, 4d, 4e, 4f, which perform their action as a barrier to the fluid when the fluid under pressure arrives from inside the valve. The fluid exerts a pressure according to the direction indicated in figure 3 with P. The ring 4f is arranged in the lower portion of the first pack 4, i.e. in the portion of the first pack 4 facing towards the region of the valve in which the fluid flows. The ring 4a is arranged in the upper portion of the first pack, i.e. in the portion of the first pack 4 farthest from the region of the valve in which the fluid flows.

Consequently, following the pressure exerted by the fluid present in the valve, the first ring 4f creates the seal and all of the remaining rings 4e, 4d, 4c, 4b, 4a further contribute to the seal following the squashing caused by the first. In particular, therefore, if the first ring 4f leaks, the seal passes on to the second ring 4e and so on up to the upper ring 4a.

In other words, the group 4 is a first barrier against the fluid of the type that auto-loads under the pressure of the fluid.

The counter pressure to the fluid is created by the spacing means 5 fixedly connected to the fixed element 1 of the valve and in contact with the upper ring 4a of the first pack 4.

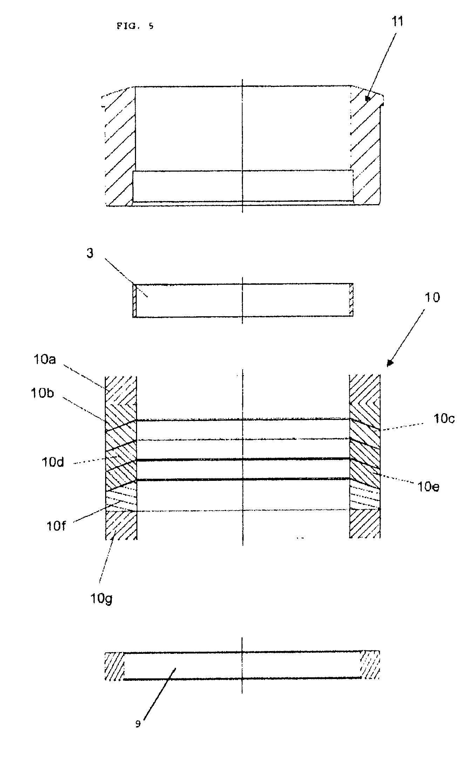

Figure 5 schematically illustrates a possible embodiment of the second outer pack 10 according to a particular embodiment of the present invention.

The outer pack 10 shown in figure 5 comprises a combination of rings 10a, 10b, 10c, 10d, 10e, 10f and 10g.

The ring 10g is arranged in the lower portion of the outer pack 10, i.e. in the portion of the outer pack 10 facing towards the region of the valve in which the fluid flows. The ring 10a is arranged in the upper portion of the outer pack 10, i.e. in the portion of the pack 10 farthest from the region of the valve in which the fluid flows.

According to an embodiment of the present invention, the rings 10b, 10c, 10d, 10e, and 10f arranged between the rings 10a and 10g are made in a multi-layer of graphite and steel so as to have the sealing and impermeable function. The rings 10a and 10g, on the other hand, are made from woven carbon fiber so as to give mechanical strength to the pack 10.

In this way, based on this embodiment of the present invention, the entire outer pack 10 has the function of making up the seal also in the case of fire. According to a further embodiment of the present invention, the second pack 10 consists of a multi-layer of rings of graphite, of fire barrier, with metallic laminations in-between to reduce the permeability of the seal system.

These embodiments of the present invention make it possible to obtain temperature-resistant seal systems, consequently maintaining the special characteristics of the seal system irrespective of the temperature of the fluid that passes through the valve.

The second pack 10 is loaded by the locking of the gland 11 placed in contact with the upper ring 10a of the second pack 10 and by the counter pressure of a bottom ring 9 arranged on the opposite side, i.e. in contact with the lower ring 10g of the second pack 10.

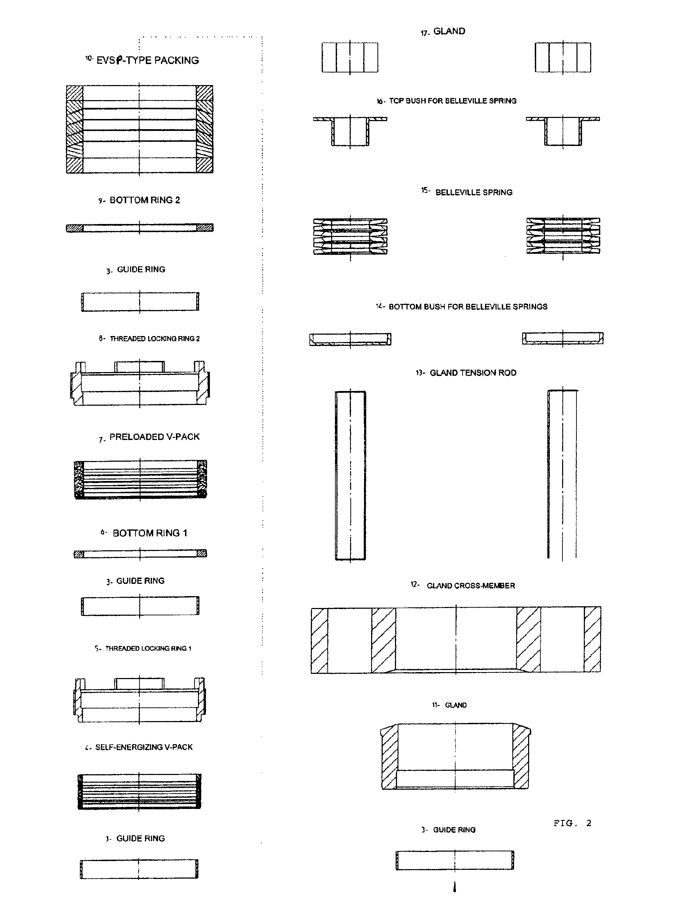

With reference to figures 1 and 2, the action on the gland 11 is carried out through an adjustable cross-member 12 through tension rods 13 and nuts 17.

The cross member 12 is arranged perpendicular to the seal system, in other words perpendicular to the axis 2A of the actuating element 2, whereas the tension rods are arranged parallel to the axis 2A and keep the cross-member 12 adequately pressed against the gland 11 with the help of springs 15. The gland 11 presses against the second pack 10 of rings.

As shown in figure 1, between the first pack 4 of rings and the second pack 10 of rings there is an intermediate pack 7 of rings.

According to an embodiment of the present invention, the intermediate pack 7 is not the same as the first pack 4.

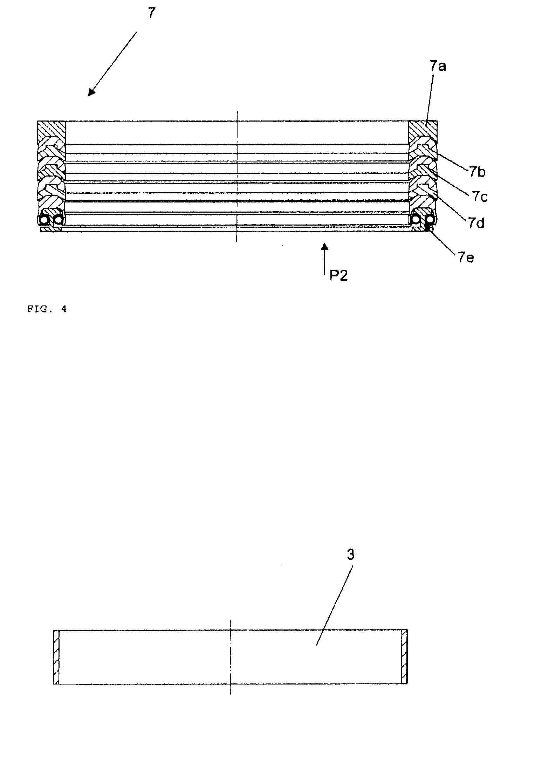

In particular, as shown schematically in figure 4, the intermediate pack 7 comprises a plurality of coaxial and adjacent rings 7a, 7b, 7c, 7d.

The ring 7a is arranged in the upper portion of the intermediate pack 7, i.e. in the portion of the intermediate pack 7 farthest from the region of the valve in which the fluid flows. The ring 7d is arranged in the lower portion of the intermediate pack 7, i.e. in the portion of the intermediate pack facing towards the region of the valve in which the fluid flows.

Moreover, the intermediate pack 7 shown in figure 4 also comprises a ring 7e placed in contact with the ring 7d. In other words, the ring 7e is the lower ring of the intermediate pack 7 of rings. The ring 7e is provided with an elastic component, for example a spring component, adapted to exert a pre-sealing action. The elastic component of the ring 7e is suitable for creating a seal on the fixed element 1 and on the actuating element 2 so that even a small amount of fluid, possibly leaking from the first pack 4, is blocked by the ring 7e (with spring). Moreover, following the increase in pressure exerted by the ring 7e, the entire second pack auto-loads and the remaining elements 7a, 7b, 7c, 7d make a seal on the fixed element 1 and on the actuating element 2.

The rings 7a, 7b, 7c, 7d 7e of the intermediate pack 7 of rings perform their leak barrier action when the fluid leaking from the first pack 4 arrives from inside the valve, according to the direction indicated in figure 4 with P2.

In other words, the group 7 is a further barrier against the fluid, with its first ring 7e preloaded by an elastic means.

The counter pressure to the fluid is created by the spacing means 8, which are threaded or fixedly connected with the fixed element 1 and in abutment on the upper ring 7a of the intermediate pack 7.

As shown in figure 1, the seal system also comprises guide rings 3. The guide rings 3 are adapted to align and centre the actuating element 2 with the seat of the fixed element 1.

The guide rings 3 shown in figure 1 are arranged equally spaced along the seal system. In particular, a first guide ring 3 in the lower portion of the system, i.e. in the portion facing towards the region of the valve in which the fluid flows, is directly fitted between the fixed element 1 and the actuating element 2. A further guide ring 3 is fitted in the first spacing means 5 arranged between the first pack 4 and the intermediate pack 7. A further guide ring 3 is fitted in the second spacing means 8 arranged between the intermediate pack and the second pack 10. Finally, a last guide ring 3 is arranged in the upper portion of the system, i.e. in the portion farthest from the region of the valve in which the fluid flows. This guide ring 3 is fitted inside the gland 11.

Each guide ring of the stem, fitted between the mobile actuating member 2 and the fixed element 1 of the valve is adapted to maintain and ensure the alignment between the components and the various packs of the system. The seal system according to the present invention makes it possible to effectively eliminate the fluid leaks at the movement of the actuation stem of the valve. Moreover, the seal system according to the present invention is easy to make and therefore has low production costs.

### INDEX OF REFERENCES TO THE FIGURES

1 - Fixed element of the valve,
2 Actuating element of the shut-off member,
3 - Guide rings,
4 - First pack,
5 - Spacing means,
7 - Intermediate pack,
8 - Spacing means,
9 - Bottom ring,
10 - Second pack ,
11 - Gland,
12 - Gland cross-member,
13 - Tension rod,
15- Elastic element,
17 -Gland nut.

## Claims

1. A fluid shut-off valve comprising a fixed element (1), arranged on or in the form of a valve cover or a valve body, an actuating element (2) passing through said fixed element (1), a shut-off component actuated by said actuating element (2) and a seal system comprising at least three independent packs (4, 7, 10) of sealing rings, said packs (4, 7, 10) being adapted to be placed in series in the coupling region between said actuating element (2) of the valve and said fixed element (1) of the valve, said packs (4, 7, 10) comprising a first pack (4) of rings placed toward the inner side of the valve, i.e. towards the portion of the valve through which the fluid flows and adapted to auto-load under the pressure of the fluid inside the valve body, a second pack (10) of rings placed toward the outer side of the valve and an intermediate pack (7) of rings placed between the first pack (4) and the second pack (10), said seal system further comprising first spacing means (5) adapted to space said first pack (4) from said intermediate pack (7) and second spacing means (8) adapted to space said intermediate pack (7) from said second pack (10), said fluid shut-off valve being
**characterized in that**
said first and second spacing means (5, 8) of said seal system are fixedly connected to said fixed element (1) of the valve so as to exert counter pressure on said first (4) and said intermediate (7) pack of rings, respectively, subject to the pressure of the fluid, thus making said at least three packs (4, 7, 10) of sealing rings adapted to be separately loaded by the pressure of the fluid present in the valve.

2. Shut-off valve according to claim 1, wherein said at least three packs (4, 7, 10) of said seal system are coaxially placed in series along the actuating element (2).

3. Shut-off valve according to one of claims 1 to 2, wherein said seal system further comprises guiding rings (3) adapted to align and centre said at least three packs (4, 7, 10) with said actuating element (2).

4. Shut-off valve according to one of claims 1 to 3, **characterized in that** said first pack (4) of said seal system comprises a plurality of coaxial and adjacent rings (4a, 4b, 4c, 4d, 4e, 4f) exerting the sealing action when the fluid under pressure (P) enters the valve, wherein the first ring (4f) exerts the sealing action and the other rings contribute to the further sealing action because of the deflection induced by the first ring (4f) so that if the first ring (4f) leaks, the sealing action is performed by the second ring and so on.

5. Shut-off valve according to one of claims 1 to 4, wherein said second pack (10) of rings of said seal system comprises a multilayer combination of graphite rings and steel rings performing the sealing and impermeable function and woven carbon fibers rings (10a, 10g) so as to give mechanical strength to the pack (10).

6. Shut-off valve according to one of claims 1 to 5, wherein said intermediate pack (7) of rings of said seal system comprises at least elastic means (7e) adapted to create a pre-load on said intermediate pack (7).

7. Shut-off valve according to one of claims 1 to 6, **characterized in that** said second pack (10) of said seal system is loaded by a gland (11) placed in contact with the upper part of said second pack (10) and by the counter-pressure of a bottom ring (9) placed in contact with the lower part of said second pack (10).

## Patentansprüche

1. Ein Absperrventil bestehend aus einem festen Element (1), das an oder in der Form einer Ventilabdeckung oder einem Ventilgehäuse angeordnet ist, einem Betätigungselement (2), das durch das besagte feste Element (1) hindurch läuft, einem Absperrteil, das durch besagtes Betätigungselement (2) betätigt wird, und einem Dichtungssystem, bestehend aus mindestens drei unabhängigen Stapeln (4, 7, 10) von Dichtungsringen, besagte Stapel (4, 7, 10) sind dabei so eingepasst, dass sie hintereinander im Kopplungsbereich zwischen dem besagten Betätigungselement (2) des Ventils und besagtem festen Element (1) des Ventils positioniert sind, besagte Stapel (4, 7, 10) bestehen dabei aus einem ersten Stapel (4) von Ringen, der an der Innenseite des Ventils positioniert ist, d.h. an dem Teil des Ventils, durch den die Flüssigkeit fließt, und so eingepasst, dass er sich unter dem Druck der Flüssigkeit im Ventilkörper automatisch lädt, einem zweiten Stapel (10) von Ringen, der an der Außenseite des Ventils platziert ist, und einem Zwischenstapel (7) von Ringen, der zwischen dem ersten Stapel (4) und dem zweiten Stapel (10) platziert ist, besagtes Dichtungssystem besteht darüberhinaus aus einem ersten Abstandshalter (5), der so eingepasst ist, dass er den besagten ersten Stapel (4) von besagtem Zwischenstapel (7) trennt, und einem zweiten Abstandshalter (8), der so eingepasst ist, dass er besagten Zwischenstapel (7) von besagtem zweiten Stapel (10) trennt, besagtes Absperrventil ist
dadurch charakterisiert, dass
besagter erster und zweiter Abstandshalter (5, 8) des besagten Dichtungssystems fest mit besagtem festen Element (1) des Ventils verbunden sind, so dass ein Gegendruck auf besagten ersten Stapel (4) bzw. besagten Zwischenstapel (7) der Ringe, abhängig vom Flüssigkeitsdruck, ausgeübt wird, wodurch die besagten mindestens drei Stapel (4, 7, 10) von Dichtungsringen so eingepasst werden, dass sie separat durch den im Ventil vorhandenen Flüssigkeitsdruck geladen werden.

2. Absperrventil gemäß Anspruch 1, wobei besagte mindestens drei Stapel (4, 7, 10) des besagten Dichtungssystems koaxial hintereinander entlang des Betätigungselements (2) platziert sind.

3. Absperrventil gemäß eines der Ansprüche 1 und 2, wobei das besagte Dichtungssystem darüberhinaus Führungsringe (3) umfasst, die so eingepasst sind, dass sie die besagten mindestens drei Stapel (4, 7, 10) an besagtem Betätigungselement (2) justieren und zentrieren.

4. Absperrventil gemäß eines der Ansprüche 1 bis 3, dadurch charakterisiert, dass besagter erster Stapel (4) des besagten Dichtungssystems eine Vielzahl von koaxialen und nebeneinanderliegenden Ringen (4a, 4b, 4c, 4d, 4e, 4f) umfasst, die den Dichtungsvorgang ausführen, wenn die Flüssigkeit unter Druck (P) in das Ventil läuft, wobei der erste Ring (4f) den Dichtungsvorgang ausführt und die anderen Ringe, aufgrund der vom ersten Ring (4f) induzierten Deflexion zum weiteren Dichtungsvorgang beitragen, so dass, wenn der erste Ring (4f) undicht wird, der Dichtungsvorgang vom zweiten Ring übernommen wird und so weiter.

5. Absperrventil gemäß eines der Ansprüche 1 bis 4, wobei der besagte zweite Stapel (10) von Ringen des besagten Dichtungssystems eine Vielschichtkombination von Graphitringen und Stahlringen umfasst, die die Abdichtung und Undurchlässigkeitsfunktion übernehmen, und gewebte Kohlefaserringe (10a, 10g), um dem Stapel (10) mechanische Festigkeit zu verleihen.

6. Absperrventil gemäß eines der Ansprüche 1 bis 5, wobei besagter Zwischenstapel (7) von Ringen des besagten Dichtungssystems zumindest elastische Elemente (7e) umfasst, die so eingepasst sind, dass sie eine Vorbelastung an besagtem Zwischenstapel (7) erzeugen.

7. Absperrventil gemäß eines der Ansprüche 1 bis 6, dadurch charakterisiert, dass besagter zweiter Stapel (10) des besagten Dichtungssystems mit einer Stopfbuchse (11) bestückt ist, die so platziert ist, dass sie in Kontakt mit dem oberen Teil des besagten zweiten Stapels (10) steht, und mit dem Gegendruck eines Grundrings (9), der so platziert ist, dass er in Kontakt mit dem unteren Teil des besagten zweiten Stapels (10) steht.

## Revendications

1. Une soupape d'arrêt de fluide comprenant un élément fixe (1), agencé sur ou sous la forme d'un couvercle de soupape ou d'un corps de soupape, un élément d'actionnement (2) passant au travers dudit élément fixe (1), un composant d'arrêt actionné par ledit élément d'actionnement (2) et un système d'étanchéité comprenant au moins trois blocs indépendants (4, 7, 10) de joints d'étanchéité, lesdits blocs (4, 7, 10) étant adaptés de façon à être placés en série dans la zone de couplage entre ledit élément d'actionnement (2) de la soupape et ledit élément fixe (1) de la soupape, lesdits blocs (4, 7, 10) comprenant un premier bloc (4) de joints placé vers le côté intérieur de la soupape, c'est-à-dire vers la partie de la soupape au travers de laquelle le fluide s'écoule et adapté de façon à s'auto-charger sous la pression du fluide à l'intérieur du corps de soupape, un deuxième bloc (10) de joints placé vers le côté extérieur de la soupape et un bloc intermédiaire (7) de joints placé entre le premier bloc (4) et le deuxième bloc (10), ledit système d'étanchéité comprenant en outre un premier moyen d'espacement (5) adapté de façon à espacer ledit premier bloc (4) dudit bloc intermédiaire (7) et un deuxième moyen d'espacement (8) adapté de façon à espacer ledit bloc intermédiaire (7) dudit deuxième bloc (10), ladite soupape d'arrêt de fluide étant
**caractérisée en ce que**
lesdits premier et deuxième moyens d'espacement (5, 8) dudit système d'étanchéité sont raccordés de manière fixe audit élément fixe (1) de la soupape de façon à exercer une contre-pression sur ledit premier bloc (4) et ledit bloc intermédiaire (7) de joints, respectivement, soumis à la pression du fluide, rendant ainsi lesdits au moins trois blocs (4, 7, 10) de joints d'étanchéité adaptés de façon à être chargés séparément par la pression du fluide présente dans la soupape.

2. La soupape d'arrêt selon la Revendication 1, où lesdits au moins trois blocs (4, 7, 10) dudit système d'étanchéité sont placés coaxialement en série le long de l'élément d'actionnement (2).

3. La soupape d'arrêt selon l'une quelconque des Revendications 1 à 2, où ledit système d'étanchéité comprend en outre des bagues de guidage (3) adaptées de façon à aligner et centrer lesdits au moins trois blocs (4, 7, 10) avec ledit élément d'actionnement (2).

4. La soupape d'arrêt selon l'une quelconque des Revendications 1 à 3, **caractérisée en ce que** ledit premier bloc (4) dudit système d'étanchéité comprend une pluralité de bagues coaxiales adjacentes (4a, 4b, 4c, 4d, 4e, 4f) exerçant l'action d'étanchéité lorsque le fluide sous pression (P) pénètre dans la soupape, où la première bague (4f) exerce l'action d'étanchéité et les autres bagues contribuent à l'action d'étanchéité complémentaire du fait du fléchissement induit par la première bague (4f) de sorte que, si la première bague (4f) présente une fuite, l'action d'étanchéité est exécutée par la deuxième bague, et ainsi de suite.

5. La soupape d'arrêt selon l'une quelconque des Revendications 1 à 4, où ledit deuxième bloc (10) de joints dudit système d'étanchéité comprend une combinaison à plusieurs couches de bagues en graphite et de bagues en acier exécutant la fonction d'étanchéité et de perméabilisation et de bagues en fibres de carbone tissées (10a, 10g) destinées à donner une résistance mécanique au bloc (10).

6. La soupape d'arrêt selon l'une quelconque des Revendications 1 à 5, où ledit bloc intermédiaire (7) de joints dudit système d'étanchéité comprend au moins un moyen élastique (7e) adapté de façon à créer une précharge sur ledit bloc intermédiaire (7).

7. La soupape d'arrêt selon l'une quelconque des Revendications 1 à 6, **caractérisée en ce que** ledit deuxième bloc (10) dudit système d'étanchéité est chargé par un fouloir (11) placé en contact avec la partie supérieure dudit deuxième bloc (10) et par la contre-pression d'une bague inférieure (9) placée en contact avec la partie inférieure dudit deuxième bloc (10).
